# EUROPEAN PATENT APPLICATION

(11) **EP 2 332 641 A1**
(43) Date of publication of application: **15.06.2011**
(21) Application number: 10191312.7
(22) Date of filing: 16.11.2010
(51) Int. Cl.: B01J 8/00, G01G 19/387, B01J 8/06

(54) **Method for blending and loading solid catalyst material into tubular structures**

(30) Priority: 09.12.2009 US 283833 P
(71) Applicant: Rohm and Haas Company, Philadelphia, Pennsylvania 19106-2399 (US)
(72) Inventor: Cavalcanti, Fernando Antonio Pessoa, Lafayette Hill, PA 19444 (US); de Courcy, Michael Stanley, Houston, TX 77059 (US); Klugherz, Peter, Huntingdon Valley, PA 19006 (US); Lonzetta, Charles, Houston, TX 77059 (US)
(74) Representative: Buckley, Guy Julian

(57) **Abstract**

The present invention relates to a method for blending and loading solid material into vessels, such as into the tubes of shell and tube reactors, in a manner which maximizes compositional homogeneity and consistency of quantities and configurations of the blended solid materials. The solid materials comprise one or more solid catalyst materials, one or more solid inert materials, or blends thereof.

## Description

### Field of the Invention

The present invention relates to a method for blending and loading solid material into vessels, such as into the tubes of shell and tube reactors, in a manner which maximizes compositional homogeneity and consistency of quantities and configurations of the blended solid materials. The solid materials comprise one or more solid catalyst materials, one or more solid inert materials, or blends thereof.

### Background of the Invention

Solid catalyst materials are used in a wide variety of chemical manufacturing processes and are typically loaded, poured, arranged, or otherwise placed in process vessels to form a reactor having one or more reaction zones. In the reaction zones, reactants are contacted with the catalyst materials, under suitable reaction conditions, to produce desired products. Initially, a new reactor is loaded with fresh, new catalyst materials, inert solid materials, and mixtures thereof, in a controlled and pre-determined manner, to organize and form the necessary reaction zones for the desired reactions and products.

After a period of operation, which varies depending on the reactants and operating conditions, the catalytic activity of the catalyst materials in the reactor diminishes to the point that operation of the reactor is no longer economically efficient or feasible. At this point, one or more of the "spent" catalysts and other solid materials must be removed from the reactor, and new, fresh "charges" of catalyst and other solid materials must be loaded, poured and arranged in the reactor to re-form the one or more reaction zones.

For example, shell-and-tube heat exchangers are commonly used as process vessels for containing reaction zones to perform certain chemical reaction processes. Such shell and tube reactors, when operated on a commercial scale to perform oxidation reactions, typically have a very large number of elongated hollow tubes (e.g., 3,000 to 30,000) which are generally parallel with one another and collectively surrounded by a shell. The inner diameter of each tube is generally between 0.75 and 2.0 inches, with a length of from about 10 to 60 feet, or more. Each of the tubes is in fluid communication with an inlet and an outlet for the passage of reactants and other process fluids through the tubes (i.e., through the "tube side" of the reactor vessel). Fluid may be circulated through the shell side of the reactor vessel to heat or cool the tubes and their contents during operation, as desired. The shell-and-tube reactor may be vertically-oriented (i.e., with the tubes oriented vertically and the reaction fluids flowing upward, or downward, through the tube), or horizontally-oriented (i.e., with the tubes oriented horizontally and the reaction fluids flowing horizontally through the tube side), depending on the desired reactions, the overall process, and the environment in which the reactor is situated.

Various chemical reaction process configurations are also known in the art and may comprise two or more catalyst-containing shell-and-tube heat exchangers in series, optionally with intermediate feed addition points and/or intermediate heat exchangers. Examples of such series, or "tandem", reactor systems are described for example in US Patent No. 6,639,106 B1 and US 7,038,079. Alternatively, process configurations comprising single reactor shell (SRS-type) reactors may be utilized. SRS reactors are well-known in the art and are described for example in US patent No. 6,384,274 B1 and US 4,256,783. Process configurations comprising single reactors in tandem with SRS-type reactors may also be employed without deviating from the spirit of the present invention.

When used to perform catalytic reactions, each of the tubes of such shell and tube reactors typically contains one or more solid catalyst materials which are arranged in the same order, pattern or composition, from tube to tube, thereby collectively forming one or more reaction zones of the reactor. One or more solid catalyst materials are typically mixed with one another, with one or more solid inert materials, or both, to obtain a more homogenous mixture of the desired solid materials, as well as to create mixtures of solids which vary in catalytic activity. Furthermore, mixtures of one or more solid inert materials, without any active catalyst materials, may be used to fill at least a portion of the reactor tubes to create inert zones upstream, downstream or intermediate active reaction zones containing one or more catalyst materials.

As discussed herein, the terms reaction "zone" and reaction "stage" are generally used to mean regions within a reaction vessel where chemical reactions occur, while "inert zones" are regions in which no chemical reaction is encouraged or catalyzed. More particularly, the term reaction "stage" is used to describe a region in which a specific desired chemical reaction is performed, catalyzed or otherwise promoted. The term reaction "zone," on the other hand, is used to describe a region within which the conditions of reaction vary due to physical and operational characteristics such as, but not limited to, catalytic activity, reaction temperature, residence time, etc. There are multiple techniques for varying each of these characteristics which are generally known to persons of ordinary skill and some of which will be discussed in further detail hereinafter. It is also well-known in the art that one or more inert zones may be formed for various purposes including, but not limited to, quenching, pre-heating, controlled cooling, manipulating reaction rates, etc. Furthermore, inert zones may be positioned upstream, downstream, or intermediate reaction zones, and inert zones may lie adjacent one another, as desired by practitioners in the field.

In accordance with the foregoing terminology, a particular reaction stage may comprise one or more reaction zones. For example, a reaction process which involves only one chemical reaction mechanism, such as dehydrogenation of ethane to form ethylene, would be said to occur in a single reaction stage wherein ethane feed material is converted directly to ethylene product. This reaction is often performed in the presence of suitable catalyst material, such as chromium-based, or nickel-alumina-based catalysts. The single reaction stage may comprise a single reaction zone, for example, containing a single catalyst material (e.g., same composition, shape, size, dilution, etc.) and being operated under the same reaction conditions (e.g., the same temperature or pressure, or the same degree of catalyst density, etc.) throughout its entire volume. In such a case, the reaction stage and reaction zone are coexistent and the terms may legitimately be used synonymously.

Alternatively, the reaction stage of an ethane dehydrogenation process may comprise more than one reaction zone, in each of which ethane is dehydrogenated, but which differ in other ways. For example, a first reaction zone may be filled with 100% chromium-based catalyst, whereas a second reaction zone may contain 100% nickel-alumina-based catalyst, or even a mixture of chromium-based and nickel-alumina-based catalyst. Alternatively, the second reaction zone may contain the same chromium-based catalyst as in the first reaction zone and, instead, differ by being maintained at a different reaction temperature, or fed by an additional reactant feed. Thus, a dehydrogenation process for conversion of ethane to ethylene is typically described as having a single reaction stage which may include one or more reaction zones, which may differ in a number of ways but in all of which the same chemical reaction mechanism occurs.

As another example, a two-stage catalytic reaction process for conversion of propylene to acrylic acid comprises a first reaction stage in which propylene is converted to acrolein and a second reaction stage wherein the acrolein from the first stage is further converted to acrylic acid. Typically, each reaction stage contains catalyst material suitable for catalyzing the desired reaction therein, such as a molybdenum-bismuth-iron-based catalyst for conversion of propylene to acrolein in the first reaction stage, and a molybdenum-vanadium-based catalyst for conversion of the acrolein of the first stage to acrylic acid in the second reaction stage. Additionally, as should now be clear, each of the first and second reaction stages may comprise one or more different reaction zones which differ from one another, within each stage, by the type, composition or strength of catalyst material, reaction temperature, etc. Furthermore, a type of short-handed terminology may be used wherein the catalyst composition present in the first reaction stage is referred to as "R1" catalyst and the catalyst composition that is used in the second reaction stage may be referred to, similarly, as "R2" catalyst. Such terminology will be used hereinafter.

Methods and apparatus for efficient removal of spent catalyst are known. Improvements to removal methods and apparatus continue to be developed to minimize damage to the tubes of the reactor vessel and the solid materials themselves. See, for example, the devices and methods described in US Patent Nos. 4,568,029, 4,701,101, 5,222,533, 5,228,484, 6,182,716 and 6,723,171. A recently developed method and apparatus for dislodging and removing solid catalyst and other materials from the tubes of shell and tube reactors is described in European Patent Application Publication No. EP1967260 and involves use of one or more hollow lances rotatably mounted on a movable carrier. The carrier is moved vertically, while the lances are axially rotated. Downward vertical movement of the carrier inserts the distal ends of the lances into the openings of the corresponding tubes of a vertically oriented shell-and-tube reactor vessel. Each hollow lance has a hard-tipped distal end shaped for impacting and dislodging the solid materials during rotation of the lance as it is inserted further into the tube. A vacuum source is connected to each hollow lance for removal of dislodged solid materials.

Similarly, various methods and apparatus for loading solid catalyst materials and inert materials into shell and tube reactors are known, all of which tend to involve and address the same general steps and issues. For example, an important preliminary step is the preparation of reasonably homogenous mixtures of one or more solid catalyst compositions, with or without inert materials, which are suitable in quantity and quality for forming reaction zones in the shell-and-tube reactor vessel. The more homogeneous the solid mixtures are, the more consistent the reaction zones formed from these mixtures will be in each tube of the reactor. The more consistent the reaction zones formed in each tube, the more uniform the reaction conditions will be throughout each reaction zone of the reactor, thereby ensuring efficient and predictable reaction processes for making products of uniform quality. It is noted that perfect or statistical homogeneity need not be achieved. As long as the variability from tube to tube is minimized to a reasonable degree, the overall efficiency of the reaction zones of the reactor will be achieved and economic operation of the reactor will be possible. Of course, the closer to perfectly homogeneous the solid materials throughout a reaction zone, from tube to tube, the more efficient and predictable will be the reactions which occur in the reaction zone.

Depending on the particular reaction or reactions, raw materials, process apparatus, desired products and operating conditions, among other factors, one or more catalysts are selected having particular properties including, but not limited to, composition, size, color, shape, purity, catalytic activity, surface area, temperature tolerance and mechanical integrity. Solid catalyst materials may be obtained from multiple individual batch manufacturing processes and, therefore, while they have substantially the same properties, one or more of these properties may vary within acceptable ranges from batch to batch. Thus, it is often advantageous to blend solid catalyst materials with one another, and even with other non-catalytic solids as already mentioned, to produce a more homogenous mixture of solid materials having the desired combination of properties and having each property to the desired degree. It is most advantageous where such blending operations produce such mixtures of solid materials efficiently and consistently.

Various devices have been developed to accomplish reasonably homogenous blending of solid materials. US Patent No. 4,285,602 describes a gravity flow blending system for granular materials, such as granular thermoplastic resins (e.g., polyethylene pellets). The system shown in US Patent No. 4,285,602 also includes a dust collector and an outlet port member for removing dust from the system. US Patent Nos. 4,907,892 and 4,978,227 provide disclosures of apparati and methods for blending solid particulate material, such as plastic pellets, using pressurized gaseous fluid for entraining the material and measuring the amount of material, by height or weight, so as to be able to equalize the fresh feed and withdrawal rates from the main vessel. US Patent No. 4,569,597 describes an apparatus for efficiently and uniformly blending solids, such as powders or other granular materials. This apparatus has interior baffles and is rotated about an axis. US Patent No. 4,553,849 provides a method and apparatus for blending solid particulate materials, such as polymer pellets, using a plurality of conduits and optional baffles.

The blending of other solid materials, such as food products, detergent powders, pharmaceuticals and metal parts, has been achieved particularly well using combinatorial weighing methods and apparatus. However, it is noted that achieving component homogeneity has not been the focus of such technologies and, therefore, would not be expected from such technologies. Generally, combinatorial weighing methods involve selecting a combination of articles whose total weight or number is closest to a desired value, and is often accomplished using computer algorithms along with sensors and feedback loop programming. See, for example, US Patent Nos. 4,661,917, 4,858,708, 5,050,064, 5,962,816, as well as devices and processes commercially available from Ishida Scales Manufacturing of Kyoto, Japan and Triangle Package Machinery Company of Chicago, Illinois. Such combinatorial weighing methods and apparatus often have vibration means to move the solid materials along through the apparatus. The blends produced by combinatorial weighing methods are known for their consistency of composition with respect to each type of component, but not necessarily for homogeneity throughout each blend. For example, where each "blend" of cereal flakes and raisins can reasonably be expected to contain the same percentage of each component, from batch to batch, it is not necessarily assured that the cereal flakes and raisins will be homogeneously mixed with one another in each blended batch.

Accurate and consistent measurement of the quantities of the various mixtures of solid materials before beginning loading operations facilitates the consistent and sequential loading of the solid materials into the tubes of a reactor to achieve uniform arrangement of solid materials in the tubes. Sometimes the mixtures of solid materials are loaded into temporary holding vessels or containers, such as bins or bags. This simplifies and speeds the later step of loading the materials into the tubes of the reactor in a consistent, predetermined and sequential order using apparatus adapted for such purposes. In practice, many of the aforementioned apparati and methods for blending solid materials, including plastic pellets, powders and food items, are coupled with known apparati and methods for producing multiple batches, or "charges," of separately packaged, or bagged, homogenous mixtures of solid materials, each having the same quantity, for use in filling the reactor tubes in accordance with the predetermined schedule.

The homogenous mixtures of solid materials are loaded, poured, arranged, or otherwise placed in the tubes to form one or more reaction zones of a process vessel. As already described hereinabove, the reaction zones differ from one another in one or more characteristics including, but not limited to, catalytic activity, reaction temperature, residence time, etc.

Each mixture of solid materials should be situated similarly in each of the tubes, i.e., the mixtures should be reasonably homogeneous compared to one another and occupy a region of the same volume and position in each tube, relative to other tubes. Clearly, where mixtures of solid catalyst materials and/or inert materials are used to form the reaction zones, it is imperative that the mixtures of solid materials be as uniform and homogenous as possible to ensure consistent and predictable catalytic activity and fluid flow throughout each reaction zone. In other words, proper configuration of reaction zone(s) requires that the various mixtures of catalyst and/or inert materials are provided to, and deposited in, each of the tubes in the same quantities, consistently, in predetermined and sequential order, having consistent density and packing ratios, relative to the other tubes. Furthermore, it is critical that each tube, or other compartment containing reaction zones, is filled with solid materials in substantially the same amount and arrangement to ensure formation of reaction zones and inert zones, of known volume and shape and, thereby, consistent catalytic activity and fluid flow.

As is understood by persons of ordinary skill in the art, in order to achieve optimal reactor performance, it is not only necessary to have uniform and homogeneous mixtures of solid materials, but it is also necessary to maintain the same arrangement from tube to tube by consistently and uniformly placing these mixtures into each tube of the reactor in the same order and height, from tube to tube, to minimize tube-to-tube variability. A key variable impacting tube-to-tube variability is the catalyst loading rate which can be measured and controlled. Much effort and research have been spent developing ways to control the catalyst loading rate.

While it is, of course, possible to load solid materials, such as catalyst and inerts, into reactor tubes by hand, such as, for example, by pouring the catalyst through a funnel, it is preferred to utilize a mechanized loading apparatus, commonly referred to in the art as a "catalyst loader." Catalyst loaders minimize tube-to-tube variability, and often will also provide a substantial increase in loading rate over manual loading methods which shortens the time necessary to load and pack all of the tubes in a reactor. Examples of suitable catalyst loaders include the single-tube loader described in U.S. Patent No. 5,626,455, which has a single tubular member for solid catalyst delivery, and the multi-tube loader disclosed in U.S. Patent No. 4,701,101, which has multiple tubular members for solid catalyst delivery to correspondingly aligned multiple tubes of a reactor vessel. Multi-tube catalyst loaders having vibrating compartments, chutes, trays, etc., such as those described in U.S. Patent Nos. 4,402,643, 6,132,157 and 6,170,670, are especially useful, not only because of their ability to simultaneously load multiple tubes, but also because the catalyst loading rate can be adjusted easily by changing the vibration frequency of the loader.

A well-known measure of catalyst loading rate is the "drop rate," or "drop time," of the catalyst. The drop rate is commonly measured in units of seconds/liter of catalyst loaded. As is well known in the art, the optimal catalyst loading rate is one which best balances the competing goals of: (a) loading as quickly as possible to minimize reactor downtime, and (b) loading slowly enough to ensure uniform distribution of the catalyst within the tubes. If particulate solids are loaded into a tube too quickly, the particles may collide and become lodged within the tube (commonly known as "bridging") at a location above their intended accumulation point.

Bridging of particulate solids in reactor tubes is typically accompanied by a corresponding void below the "bridge" and results in less catalyst being loaded into the tubes than intended and / or longer than expected zone lengths. Such non-uniform filling of the tube will result in uncontrolled, variable packing density along the tube length and is to be avoided. Uncontrolled variations in packing density may result in hot spots, significant tube-to-tube variability in performance, and generally lower product yields. Non-uniform filling can generally be detected through measurement of actual zone length in a given tube vs. the target zone length (commonly referred to as "outage measurement"); generally an increase of more than about 5-10% increase in zone length vs. the target length is indicative of non-uniform filling.

Another common method for detecting non-uniform filling of tubes with solids materials is to measure the pressure drop (dP) of a known reference gas flow through that tube. U.S. Patent No. 6,694,802 discloses an example of a device used for simultaneously measuring dP through multiple catalyst-containing tubes. Many other devices operating on essentially the same principle are known. The measurement of dP may be performed at any point in the loading process to ensure that tube-to-tube packing density is within acceptable limits. For example, it is common in the loading of SRS-type reactors to check dP after a completing the placement of the first reaction stage within the reactor. Typically, variation in dP measurements is considered excessive when a given tube is more than about 20% higher or lower than the average measured pressure drop value. Typically the pressure drop of a given tube should not be more than 15%, for example not more than 10%, higher or lower than the average measured pressure drop value.

Additionally, if dP measurement of the tubes is employed, it will be recognized by persons of ordinary skill that it is not necessary, in all cases, to measure the pressure drop in every tube. Rather, a random sampling of tubes will often be sufficient for quality control purposes. If a random sampling of tubes is used, not more than 25% of the tubes undergo dP measurement, such as for example, not more than 10%, or not more than 5%, or even not more than 1% of the tubes, undergo dP measurement.

In some cases, a higher-than-expected pressure drop may result from accumulation of catalyst fines, dust, and/or tailings within a given tube, rather than from catalyst bridging. This situation may often be corrected by blowing a volume of pressurized dry gas (such as, for example, 100 -120 psig air or nitrogen) into one end of the tube, through the solid materials packed in the tube, and out the opposite end of the tube - thereby ejecting the unwanted particulates that may be restricting flow. The degree of catalyst fines accumulation can often be minimized by utilizing vibratory catalyst loaders comprising dust removal means, such as vacuum hoods, screening trays, and the like (see for example US6132157, US6170670 and US2006/0243342), which keep such dust and fines from entering the tubes during loading of the solid materials. In accordance with the method of the present invention, optional dust removal means may also be employed within the combinatorial weighing system to further minimize dust contained in a particular mixture of solid materials.

If indications of significant bridging, such as excessive pressure drop or longer than expected zone lengths, is identified for a given tube, it is necessary to remove sufficient solid materials (catalyst, inert, etc.) to eliminate the bridge and then to replace these removed solids with fresh solid materials of the same composition. The avoidance of bridging altogether is obviously preferable to the use of such time-consuming corrective measures. It is, therefore, the knowledge of the minimum drop rate (seconds/liter) that is key to the avoidance of bridging during catalyst loading, as drop rates slower than the minimum will also avoid bridging.

The quickest allowable drop rate that may be used without the occurrence of bridging is dependent on many factors, most notably the size of the catalyst particle relative to the inside diameter of the tube into which it is loaded, the shape of the catalyst particle, and particle-to-particle uniformity. Other factors that may affect the allowable drop rate include the density of individual catalyst particles, the surface finish (or roughness) of the catalyst particles, the friability of the particles, the tendency of the particles to agglomerate or self-adhere, and the tendency of the particles to absorb moisture and swell. It will of course be apparent to persons of ordinary skill that similar concerns apply to all mixtures of solid materials, including solid catalysts, inert materials, and blends thereof, which may be loaded into reactor tubes.

Given the many variables that affect the minimum drop rate, it is not surprising that a wide range of drop rates have been disclosed in the art. For example, U.S. Patent Publication No. 2006/0245992 explains that different particulate solid geometries and sizes require different minimum drop times. In particular, it is reported that 8 millimeter diameter ceramic balls loaded into tubes of 25mm inside diameter require a drop rate of not shorter than 30 seconds per liter, whereas catalyst rings of 8mm diameter require twice the drop time of the ceramic balls, or not shorter than 60 seconds per liter. Similarly, in U.S. Patent No. 5,626,455, it is disclosed that 8mm (5/16-inch) diameter x 9.5mm (3/8-inch) long silver-catalyst particles can be loaded into ethylene oxide reactor tubes of between ¾" and 2" (19mm - 51 mm) inside diameter at a typical drop rate of 90 seconds/liter.

Given this wide variation in drop rates, the minimum particulate solids drop rate for a specific catalyst loading situation are typically determined empirically, on a case-by-case basis, by simple trial-and-error experimentation, as will be described in greater detail hereinafter in accordance with the present invention. This use of experimentation is especially preferred when catalyst blends - such as those produced by the method of the present invention - are being loaded, because the drop rates for these blends will be most difficult to predict by other means given complex particle-to-particle interactions, such as those which might occur, for example, between a mixture of variable-geometry particles in a diluted catalyst charge.

The present invention addresses the above-described issues and requirements by employing combinatorial weighing machines to blend and prepare distinct and separate batches, or charges, of mixed solid materials, each comprising at least one solid catalyst material or solid inert material, in predetermined amounts. The batches of mixed solid materials are collected and later loaded into the tubes of a tubular reactor to form the various desired reaction zones to perform the desired chemical reactions.

### Summary of the Invention

The present invention provides a method for blending and loading solid material into the tubes of a shell and tube reactor. The method involves identifiying a packing schedule which lists the types and amounts of solid materials needed to form different batches of solid materials for arranging in the tubes and forming desired regions in the shell and tube reactor. Each of the batches comprises one or more materials selected from the group consisting of: solid catalyst materials, solid inert materials, and blends thereof. The present method next requires using a combinatorial weighing machine to produce the different batches, and the types and amounts of solid catalyst materials and solid inert materials blended for each batch of solid materials are selected based on the packing schedule. Each of the batches of solid materials is collected in a plurality of containers, and each container contains the same amount and proportion of the one or more solid materials, where the amount is determined based upon the packing schedule. Each of said plurality of containers comprises a total number of containers which is determined by the number and size of the tubes of the shell and tube reactor.

In a particular embodiment, the present method includes loading the batches of solid materials from each of the containers into corresponding tubes of the shell and tube reactor, according to a predetermined order dictated by the packing schedule, to form the desired regions within the reactor consistently and homogeneously.

Various embodiments are possible. For example, the combinatorial weighing machine may comprise adjustable vibrating means for changing the rate at which solid materials are moved through the machine and blended with one another. The combinatorial weighing machine may comprise dust collection means for collecting and removing dust from the solid materials, thereby preventing unwanted accumulation of dust in the tubes of the shell and tube reactor.

The containers may be bags and a bagging machine may be used with the combinatorial weighing machine to accomplish the step of collecting each of the batches of solid materials in a plurality of containers.

The step of loading the batches of solid materials from each of said containers into corresponding tubes of the shell and tube reactor is accomplished using a solids loading machine having one or more tubular members aligned with corresponding tubes of the shell and tube reactor.

The method of the present invention may further be applied to load a reactor for two-stage oxidation of an alkene to form a corresponding unsaturated carboxylic acid. In such an embodiment, a packing schedule is selected which provides a list of types and amounts of materials required to perform two-stage oxidation of an alkene to form a corresponding unsaturated carboxylic acid, and the desired regions comprise a first reaction stage wherein the alkene is converted to an unsaturated aldehyde and a second reaction stage wherein the unsaturated aldehyde is further converted to the corresponding unsaturated carboxylic acid. Furthermore, the first reaction stage may comprise at least one catalyst comprising a mixed metal oxide and being capable of catalyzing the conversion of an alkene to an unsaturated aldehyde, and the second reaction stage may comprise at least one catalyst comprising a mixed metal oxide and being capable of catalyzing the conversion of an unsaturated aldehyde to an unsaturated carboxylic acid. Either or both of the first and second reaction stages may comprise one or a plurality of reaction zones.

### Brief Description of the Drawings

A more complete understanding of the present invention will be gained from the embodiments discussed hereinafter and with reference to the accompanying drawings, in which like reference numbers indicate like features, and wherein:
Figure 1 is a schematic elevational view of a single tube of a shell and tube reactor in which a 2-stage, 3-zone catalyst packing schedule has been created using the method of the present invention;
Figure 2A is a schematic elevational view of a single tube of a shell and tube reactor in which a 2-stage, 4-zone catalyst packing schedule has been created using the method of the present invention;
Figure 2B is a top plan view of a catalyst clip used to retain the solid materials in the tube of Figures 1 and 2A; and
Figure 3 is a schematic representation of the combinatorial weighing machine system with dust collector and bagger options which is used in accordance with the method of the present invention.

### Detailed Description of the Invention

The method of the present invention is suitable for blending and loading solid materials into vessels, such as into the tubes of shell and tube reactors, in a manner which maximizes compositional homogeneity and consistency of quantities and configurations of the blended solid materials. The solid materials comprise one or more solid catalyst materials, one or more solid inert materials, or blends thereof.

More particularly, the present invention provides a method for blending and loading solid material into the tubes of a shell and tube reactor. The method involves identifiying a packing schedule which lists the types and amounts of solid materials needed to form different batches of solid materials for arranging in the tubes and forming desired regions in the shell and tube reactor. Each of the batches comprises one or more materials selected from the group consisting of: solid catalyst materials, solid inert materials, and blends thereof. There may be one or more types of solid catalyst materials, as well as one or more types of inert materials. The desired regions are determined based on what types of products are desired and what starting materials are to be used, which, in turn, dictates what chemical reactions are to be performed by the reaction process. All such selections and decisions concerning which processes, products and starting materials to use, are well known and understood to practitioners in industry as persons of ordinary skill in the art who typically exercise such judgment on a routine basis early in the process design stages.

The method according to the present invention uses a combinatorial weighing machine to produce the different batches, and the types and amounts of solid catalyst materials and solid inert materials blended for each batch of solid materials are selected based on the packing schedule. Each of the batches of solid materials is collected in a plurality of containers, and each container contains the same amount and proportion of the one or more solid materials, where the amount is determined based upon the packing schedule. Each of said plurality of containers comprises a total number of containers which is determined by the number and size of the tubes of the shell and tube reactor. Finally, the present method calls for loading the batches of solid materials from each of the containers into corresponding tubes of the shell and tube reactor, according to a predetermined order dictated by the packing schedule, to form the desired regions within the reactor consistently and homogeneously.

The method of the present invention is not limited to use with a specific reaction process, but rather, may be utilized with any known solid particulate catalysts and/or solid inert materials in numerous reaction systems. Conventional examples of catalysts and their associated oxidation production processes to which the method of the present invention is applicable include, but are not limited to:
(1) a catalyst that comprises silver as an essential component and is useful for production of ethylene oxide by oxidizing ethylene in a gas phase (for example, JP-A-116743/1988, JP-A-4444/1987, JP-A-329368/1993, JP-A-510212/1998, and JP-A-84440/1993);
(2) a catalyst that comprises molybdenum, bismuth, and iron as essential components, and is useful for production of (meth)acrolein and (meth)acrylic acid by oxidizing propylene, isobutylene, tert-butanol, and/or methyl tert-butyl ether in a gas phase (for example, JP-A-13308/1975, JP-A-56634/1989, JP-B-52013/1981, JP-B-23969/1981, and JP-A-76541/1984);
(3) a catalyst that comprises molybdenum and vanadium as essential components, and is useful for production of acrylic acid by oxidizing acrolein in a gas phase (for example, JP-B-11371/1974, JP-A-85091/1977, JP-A-279030/1994, and JP-A-299797/1996);
(4) a catalyst that comprises molybdenum and phosphorus as essential components, and is useful for production of methacrylic acid by oxidizing methacrolein in a gas phase (for example, JP-B-33539/1985, JP-B-26101/1991, and JP-A-12758/1984);
(5) a catalyst that comprises vanadium and titanium as essential components, and is useful for production of phthalic anhydride by oxidizing o-xylene and/or naphthalene in a gas phase (for example, JP-B-29056/1995 and JP-B-15176/1983);
(6) a catalyst that comprises molybdenum as an essential component, and is useful for production of maleic anhydride by oxidizing benzene in a gas phase (for example, JP-A-78/1987);
(7) a catalyst that comprises phosphorus and vanadium as essential components, and is useful for production of maleic anhydride by oxidizing n-butane in a gas phase (for example, JP-A-167711/1998, JP-A-51573/1995, JP-A-115783/1993, and JP-A-35088/1975);
(8) a catalyst that comprises molybdenum as an essential component, and is useful for production of propylene, acrolein, and/or acrylic acid by oxidizing propane in a gas phase (for example, JP-A-316023/1997, JP-A-57813/1998, and JP-A-120617/1998);
(9) a catalyst that comprises vanadium as an essential component, and is useful for production of pyromellitic anhydride by oxidizing durene in a gas phase; and
(10) other solid particulate catalyst used for a gas-phase catalytic oxidation reactions by packing in a fixed-bed shell-and-tube reactor.

The catalysts suitable for use in connection with the present invention are not especially limited to the above solid particulate catalysts (1) to (10) used for a gas-phase catalytic oxidation reactions, but other solid particulate catalysts used for other reactions such as, without limitation, ammoxidation reactions, hydrogenation reactions, and dehydrogenation reactions are also suitable in accordance with the present invention.

For example, a catalyst that comprises a Group VIII noble metal, a Group IA and/or a Group IIA component as essential components, and is useful for the oxidative dehydrogenation (ODH) of alkanes to alkenes (see U.S. Patent No. 4,788,371), such as, for example, the conversion of propane to propylene (see U.S. Patent Publication No. US 2008/0177117).

Also, a catalyst that comprises gold and palladium as essential components, and is useful for the production of vinyl acetate monomer (VAM) by reaction of ethylene, oxygen, and acetic acid in the gas phase (for example, see U.S. Patent Nos. 5808136, 5859287 and US6013834).

More generally, for example but without limitation, commercial-scale, shell-and-tube type, catalytic reaction systems typically use particulate solid catalysts and inert materials within their tubes. While the use of blended catalyst mixtures can provide the opportunity for improved reactor productivity and yield, it has been quite difficult in practice to achieve mixtures of sufficient homogeneity to realize such benefits with large-scale commercial reaction systems. While perfect homogeneity need not be achieved, as previously understood in the art, substantial homogeneity is required.

Reliable blending of solids is, in general, very difficult and known methods of mixing materials tend to fall far short of producing the desired homogeneous mixtures. Homogenous blending of particulate solids is especially difficult, even more so than the blending of powdered solids.

It is noted that the terms "blend" and "mixture" are used herein interchangeably to mean a quantity of solid materials that contains more than one type of solid materials, such as, two or more catalysts which differ in composition, activity, shape, size, etc., or at least one catalyst and at least one inert material, or two or more inert materials which differ in composition, shape, size, etc. In accordance with the present invention, it should be understood that use of the combinatorial weighing machine(s) to produce various blends and mixtures of solid materials simultaneously accomplishes the combination of the desired amounts of each type of solid material, as well as sufficient mixing of the solid materials without subsequent mechanical mixing or stirring of the solids after they are combined.

The bulk catalyst loaders known in the art for loading catalyst materials into reactors, are not able to reliably blend mixtures of solid catalysts and/or inert solids to achieve sufficient homogenous reaction zones within reactor tubes.

Pre-blending of catalysts and or inert materials is potentially a better solution, but up to now has had to rely upon mechanical mixing means - such as stirring, tumbling, & vibrating - which are known to be insufficient for achieving truly homogenous mixtures with particulate solids; additionally, such mechanical mixing means also tend to damage / fracture / crumble catalysts and inerts, which are often brittle and/or friable, introducing catalyst fines / dusts into the catalyst charge and leading high to pressure drops within the reaction system.

Catalyst may be purchased from commercial suppliers prepackaged in containers, such as plastic bags. As previously noted, catalyst which is prepackaged in this way allows for easier handling of catalyst and more efficient loading of catalyst materials into reactor tubes. Typical weight variability of such commercially available prepackaged charges is about +/- 5%, or roughly +/- 120 grams per nominal 2000-gram charge weight. This is an undesirably high level of weight variability and will result in high tube-to-tube variations in reaction zone length, undesirable non-uniformity of reaction zone activities, and ultimately diminished reactor performance. Additionally, the manual process by which such prepackaged charges are prepared is time consuming, requiring between 1 and 10 minutes per bag. This can be a significant cost component of the catalyst purchase price when tens of thousands of bags of catalyst are required to load a reactor. With additional care, repetitive weight measurement, and numerous adjustment steps (adding / removing a portion of catalyst to / from the container during filling), it is possible to reduce weight variability to +/- 2%, or roughly +/- 40 grams per 2000-gram charge weight; however, this still represents significant tube-to-tube variation and the time required to prepare each bag is substantially increased, which results in higher catalyst costs which are, of course, passed on to the purchaser.

By using the combinatorial weighing and bagging machine system in accordance with the method of the present invention, it is possible to achieve substantially lower weight variability than with manual bagging methods, for example not more than +/- 1 % by weight variability based on the total desired weight of each bag. As detailed in Example 1, 2000-gram catalyst charges are produced in accordance with the method of the present invention having a weight variability within +/-3 grams, or only about +/- 0.2% weight variability. In addition, the method of the present invention is capable of performing this task at rates equal to or greater than 35 bags/minute. Thus, the method of the present invention provides an extremely cost effective means for obtaining bags of catalyst which are suitable and ready for loading into the oxidation reactor. That is, the method allows for purchase of catalyst materials in bulk, which is less costly than pre-bagged catalyst, and, by utilizing the method of the present invention, thousands of bags of catalyst with extremely low weight variability per charge may be rapidly and cost-effectively produced.

Thus, applicants have discovered that the use of combinatorial weighing machines, such as those typically used in the food packaging industry, can be successfully employed to produce such highly desirable substantially homogeneous particulate-solid blends. Additionally, we have found that such blends can be produced quickly and efficiently, and can be integrated into the catalyst handling process to yield pre-measured, bagged catalyst charges suitable for use with known catalyst loaders.

Previously existing and used mixing technologies have not accomplished sufficiently homogeneous blending of solid catalyst and inert materials without also damaging the catalyst or inert materials. Further, because it is weight-based, the method of blending with combinatorial weighing machines is substantially less susceptible to errors resulting from catalyst agglomeration, inter-particle surface friction, or particle swelling due to moisture pickup. The net result of this method is that it is now possible to produce an infinite number of particulate catalyst blends to be used in optimized packing schedules for commercial scale reaction systems, such as the production of (meth)acrolein, (meth)acrylic acid, ethylene oxide, propylene oxide, vinyl acetate monomer, etc.

Examples of combinatorial weighing machines that may be used in accordance with the method of the present invention include machines produced by Ishida Co., Ltd of Kyoto, Japan; Yamoto Scale Co., Ltd of Akashi, Japan; Package Machinery Co. of Stafford Springs, CT USA; Triangle Package Machinery of Chicago, IL USA; and Hassia-Redatron of Butzback, Germany. It is advantageous to install the combinatorial weighing system in a humidity controlled environment to minimize the potential for moisture absorption by the catalyst particles, as this can lead to incremental weight gain and adversely affect the determination of weights in the system scales.

The method of the present invention is described in further detail hereinbelow in the detailed examples wherein combinatorial weighing machines are successfully used to reliably and consistently blend catalysts and inerts of differing sizes, geometries, and particle densities to achieve substantially homogeneous mixtures.

### EXAMPLES

### Example 1 [lot blending example]

Ten lots of YX-38.52DU ("R1" type) oxidation catalyst, commercially available from Nippon Kayaku of Japan, were used in this example. Each lot of catalyst comprised about 230 kg of catalyst pellets and was contained in its own uniquely-numbered drum. Samples of approximately 80 grams were taken from each drum (lot) and were independently tested in a laboratory-scale reaction system to determine propylene conversion. For comparison purposes, all samples were tested at constant conditions, using the same reaction temperature, pressure, space velocity, time-on-stream, propylene concentration, and propylene:air:steam feed ratio. The results were as follows:

| **TABLE 1A** | | |
|---|---|---|
| **Catalyst Lot #** | **Drum Weight (kg)** | **Propylene Conversion** |
| 87 | 230 | 97.765% |
| 123 | 230 | 97.765% |
| 70 | 230 | 97.764% |
| 36 | 230 | 97.761% |
| 140 | 230 | 97.756% |
| 18 | 230 | 97.756% |
| 157 | 230 | 97.747% |
| 244 | 110 | 97.744% |
| 175 | 230 | 97.744% |
| 228 | 230 | 97.743% |

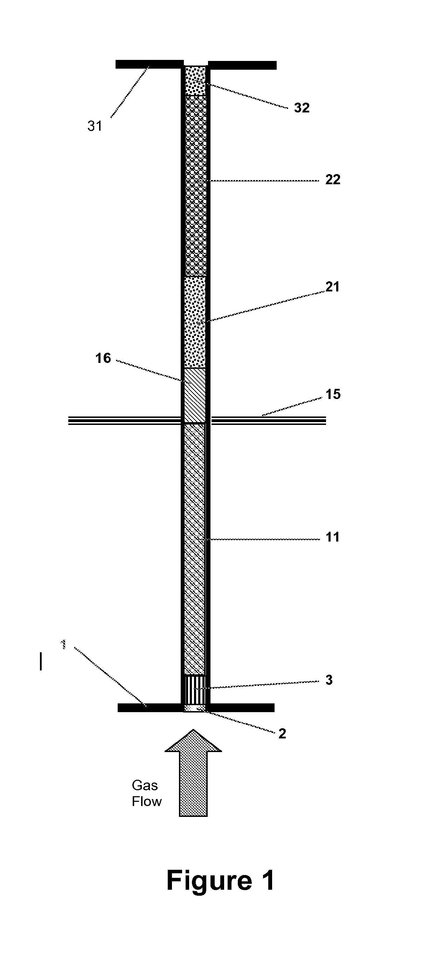

To achieve more uniform catalyst performance in the commercial-scale reaction system, these ten lots were blended together using a Combinatorial Weighing system according to the method of the present invention to produce 2,180 kg of a homogeneous "R1Z1" catalyst mixture (100% catalyst pellets) for use in the first reaction stage (11) of the example commercial-scale reactor illustrated in Figure 1. This homogeneous R1Z1 catalyst mixture had a blended propylene conversion of 97.755%. The objective of this operation was to produce complete charges of catalyst mixture with a target weight of 2040.6 grams/charge and to place each charge so produced into a sealed polyethylene bag. In this example, blending is enhanced by adjusting system settings to produce a half-charge (1020.3 grams) per scale cycle and to use 2 scale cycles per bag.

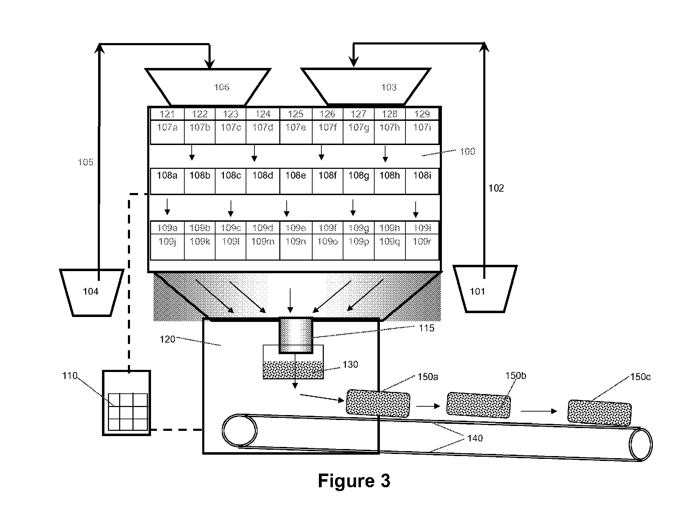

The combinatorial weighing system used in this example is shown schematically in Figure 3. It is a Selectacom, Model A918H1RN, in-line weigher with optional dust collection (100), in combination with a model SB62PR vertical form/fill/seal (f/f/s) bagger (120); both machines are available from Triangle Package Machinery Company of Chicago, Illinois USA and are similar to those configured and adapted for packaging solids foods, such as dry cereals. As assembled, the left feed train (104, 105, 106) and the right feed train (101, 102, 103) continuously supply material to the top of weigher (100); weigher (100) surmounts the bagger (120) such that catalyst pellets move vertically downward through the weigher and exit as bagged charges (150a, 150b, 150c) of catalyst mixture from the bottom of the bagger. The entire system is configured to use a single, common computer controller module (110). In this example, the computer controller (110) is adjusted to enable operation in the "single-product" mode.

Optional drum dumping units (not shown) were utilized in this example to transfer drums of catalyst into the two large feed hoppers (101, 104) at the base of the combinatorial weighing system (five drums into each hopper). For the purposes of clarity, material placed in hopper (101) will be referred to in this example as "Catalyst R" and material placed in hopper (104) will be referred to as "Catalyst L". Upon starting the system, the Left Feed Train and the Right Feed Train operated independently at speeds sufficient to maintain pace with the usage rate of the two catalyst streams. In this case, conveyors (102, 105) continuously transferred catalyst pellets from each large feed hopper to two small hoppers (103, 106) at the top of the system. Any dust present was continuously removed from the hoppers and conveyors via an optional integrated aspirating system (not shown). The small hoppers (103, 106) transferred catalyst pellets into a set of 9 vibrating feeders (121, 122, 123, 124, 125, 126, 127, 128, 129), each adjusted independently via controller (110) to operate at specific amplitude. In this example, the specific amplitude settings were as follows:

| | | | | | | |
|---|---|---|---|---|---|---|
| Feeder | 121 | 122 | 123 | 124 | - - - | average |
| amplitude | 51 | 54 | 53 | 46 | - - - | 51 |
| | | | | | | |
| Feeder | 125 | 126 | 127 | 128 | 129 | average |
| amplitude | 50 | 49 | 40 | 43 | 45 | 45.4 |

These vibrating feeders delivered catalyst pellets at rates dependent on their amplitude setting to accumulators (107a, 107b, 107c, 107d, 107e, 107f, 107g, 107h, 107i) with larger amplitude values delivering a greater quantity of catalyst pellets per unit time into the accumulators and smaller amplitude settings delivering a lesser quantity of catalyst pellets per unit time into the accumulators; in this specific case, the left side Feeders (121, 122, 123, 124) transferred pellets of Catalyst L into four of the accumulators (107a, 107b, 107c, 107d) and the right side feeders (125, 126, 127, 128, 129) transferred pellets of Catalyst R into the remaining five accumulators (107e, 107f, 107g, 107h, 107i). Because the vibrating feeders were set at range of amplitude settings, rather than a single, identical amplitude setting, weight variations were intentionally incorporated into each accumulator to enhance blending; through experimentation with the system, we have determined that a variation of only about 5 and 10% in the individual amplitude settings, relative to the average setting, is sufficient to provide good results. It should also be noted that the average amplitude of the four left side feeders (121, 122, 123, 124) should be greater than the average amplitude of the five right side Feeders (125, 126, 127, 128, 129) to compensate for the differing number of feeders on each side.

After being filled, each accumulator then simultaneously transferred its contents into one of 9 scales (108a, 108b, 108c, 108d, 108e, 108f, 108g, 108h, 108i) directly below them, resulting in four scales containing Catalyst L (108a, 108b, 108c, 108d) and five scales containing Catalyst R (108e, 108f, 108g, 108h, 108i). After determining the weight of pellets in each of the scales, the scales dropped the material into 9 of 18 holders (109a, 109b, 109c, 109d, 109e, 109f, 109g, 109h, 109i, 109j, 109k, 1091, 109m, 109n, 109o, 109p, 109q, 109r); these steps were repeated a second time to fill the remaining 9 holders.

The computer controller (110) then selected an optimal subset of the 18 individual weights, which when combined, achieves the closest match to the target weight of 1020.3 grams. These selected holders then opened simultaneously to release into discharge port (115) enough pellets to create a half-charge of catalyst; the release of pellets from the selected holders into the discharge port signifies the end of a single scale cycle.

Additional catalyst pellets then moved through the accumulators and scales to refill the emptied holders and the weight-optimization-and-release step was repeated, signifying the end of another scale cycle. As previously stated, the system was configured in this example to release a half-charge (1020.3 grams) of catalyst mixture per scale cycle and to use 2 scale cycles per bag of catalyst mixture, thereby producing bags of catalyst mix with a target charge weight of 2040.6 grams. Below the weigher (100), the vertical f/f/s bagger (120) continuously drew polyethylene film from a supply roll (not shown), shaped it into a nine inch (22.9 cm) diameter cylinder, vertically sealed the cylinder to form a tube, and then sealed the tube horizontally at the bottom edge to form a bag below discharge port (115). Controller 110 was programmed to produce bags that were 12 inches (30.5 cm) in length, sufficient to hold the desired charge volume. The formed bag was then filled with the aforementioned single blended charge of catalyst (130), the top was sealed horizontally, the finished bag of catalyst was cut free (the remaining edge becoming the bottom of the next bag) and the finished bag exited the bagger on a conveyor belt (140). Each successive finished bag (150a, 150b, 150c) was visually inspected and manually placed into a storage drum (not shown). The system continued operating in this fashion, producing over 1050 bagged catalyst charges at a rate of about 35 bags/minute, until the large feed hoppers (101, 104) were emptied.

As this operation progressed, 8 finished bags were withdrawn from the conveyer belt at approximately 3.5 minute time intervals to serve as quality control samples. The contents of each sample bag were individually poured into a tared container and weighed.

| **Table 1B** | | |
|---|---|---|
| Bag # | Weight (grams) | Wt.% error |
| 1 | **2037.55** | -0.15 |
| 2 | **2037.35** | -0.16 |
| 3 | **2039.25** | -0.07 |
| 4 | **2039.40** | -0.06 |
| 5 | **2040.90** | 0.01 |
| 6 | **2039.40** | -0.06 |
| 7 | **2037.40** | -0.16 |
| 8 | **2039.90** | -0.04 |

Table 1B compares the measured weights of the samples to the target weight; it is evident from this data that the method of the present invention reproducibly provides catalyst charges with negligible variation in weights.

Although this example illustrates blending of lots in a single step, it is of course possible to utilize this same process to create multi-pass blends in which the first blend is collected in a bulk container, rather than individual bags, and then recycled back to the feed hopper to be successively blended with additional material.

### Example 2 [uniformity of dilution example]

In accordance with the method of the present invention, a homogeneous "R2Z1" catalyst mixture (75 wt% catalyst pellets / 25 wt% diluent) was prepared for use in the second reaction stage of the example commercial-scale reactor. This R2Z1 catalyst mixture is to be placed in the upstream zone of the second reaction stage (21) as illustrated in Figure 1.

The same Combinatorial Weighing system described in Example 1 and illustrated in Figure 3 was again used. The specific catalyst in this example was T-202.52XS3 (R2 type) and the diluent was IB-1000 5mm diameter inert spheres, both commercially available from Nippon Kayaku.

Catalyst, the majority component of the catalyst mixture, was placed in the right side large feed hopper (101) at the base of the combinatorial weighing system and diluent, the minoroity component of the catalyst mixture, was placed in the left side large feed hopper (104). The scale's computer controller (110) was adjusted to enable operation in the "two-product" mode and the target percentage of diluent was set to 25%. Additionally, system settings were adjusted to produce a full charge (566.5 grams target weight) per scale cycle and to use 1 scale cycle per bag.

Upon starting the system, conveyors (102, 105) continuously transferred catalyst pellets and diluent from the large hoppers to the two smaller hoppers (103, 106) at the top of the system. The Left Feed Train (104, 105, 106) and the Right Feed Train (101, 102, 103) operated independently at speeds sufficient to maintain pace with the usage rate of the two streams. Any dust present was continuously removed from the hoppers and conveyors via an optional integrated aspirating system (not shown).

The small hoppers (103 & 106) transferred catalyst pellets into a set of 9 vibrating feeders (121, 122, 123, 124, 125, 126, 127, 128, 129), each adjusted independently via controller (110) to operate at specific amplitude. In this example, the specific amplitude settings were as follows:

| | | | | | | |
|---|---|---|---|---|---|---|
| Feeder | 121 | 122 | 123 | 124 | - - - | average |
| amplitude | 35 | 40 | 44 | 46 | - - - | 41.3 |
| | | | | | | |
| Feeder | 125 | 126 | 127 | 128 | 129 | average |
| amplitude | 36 | 15 | 15 | 25 | 18 | 21.8 |

These vibrating feeders delivered catalyst pellets at rates dependent on their amplitude setting to accumulators (107a, 107b, 107c, 107d, 107e, 107f, 107g, 107h, 107i); in this specific case, the left side Feeders (121, 122, 123, 124) transferred pellets of diluent into four of the accumulators (107a, 107b, 107b, 107d) and the right side feeders (125, 126, 127, 128, 129) transferred pellets of Catalyst into the remaining five accumulators (107e, 107f, 107g, 107h, 107i). Because the vibrating feeders were set at range of amplitude settings, rather than a single, identical amplitude setting, weight variations were intentionally incorporated into each accumulator to provide a wider range of weight choices for the controller to select from, thereby improving weight accuracy. Through experimentation with the system, we have determined that setting the amplitude of a single vibrator within the five right side feeders to a value of between 1.5 and 2 times the average value provides especially good weight accuracy.

The accumulators then simultaneously transferred their contents into 9 scales (108a, 108b, 108c, 108d, 108e, 108f, 108g, 108h, 108i) directly below them, resulting in four scales containing diluent (108a, 108b, 108c, 108d) and five scales containing catalyst (108e, 108f, 108g, 108h, 108i). After determining the weight of particulate material in each of the scales, the scales dropped the material into 9 of 18 holders (109a, 109b, 109c, 109d, 109e, 109f, 109g, 109h, 109i, 109j, 109k, 109l, 109m, 109n, 109o_{,} 109p, 109q, 109r); these steps were repeated a second time to fill the remaining 9 holders.

The computer controller (110) then selected an optimal subset of the 18 individual weights, which when combined, achieves the closest match to the target weight of 566.5 grams total charge weight, while simultaneously providing the closest match to the required weight ratio of 424.875 grams of catalyst and 141.625 grams of diluent; these selected holders then opened simultaneously to release into discharge port (115) enough particulate solids to create a single blended charge of catalyst. Additional particulate material then moved through the accumulators and scales to refill the emptied holders and the weight optimization and release cycle was repeated. As previously stated, the system was configured in this example to release a full charge (566.5 grams) of catalyst mixture per scale cycle and to use just 1 scale cycle per bag of catalyst mixture.

Below the weigher (100), the vertical f/f/s bagger (120) continuously drew polyethylene film from a supply roll (not shown), shaped it into a nine inch (22.9 cm) diameter cylinder, vertically sealed the cylinder to form a tube, and then sealed the tube horizontally at the bottom edge to form a bag below discharge port (115). Controller (110) was programmed to produce bags that were 8.5 inches (21.6 cm) in length, sufficient to hold the desired charge volume. The bagger operated as in the previous example, discharging finished bags containing single, complete charges of R2Z1 catalyst mixture onto the conveyor belt. Each finished bag was visually inspected and manually placed into a storage drum. Additional catalyst and diluent were added to the respective large feed hoppers as needed to allow for long-term continued operation of the combinatorial weighing system. The system continued operating in this fashion, at a rate of 25 bags/minute, until over 26,750 R2Z1 catalyst charges had been produced.

As this operation progressed, 15 sample bags were randomly withdrawn from the conveyer belt at regular time intervals.

Each sample (unopened bag) was weighed initially to determine the total weight. The bag was then opened, the contents were poured out, and the diluent and the catalyst were hand-separated. The empty bag was weighed and the actual charge weight was calculated; the calculated charge weight was then compared to the target charge weight of 566.5 grams ("Charge Wt Error"). Finally, the catalyst and diluent were individually weighed to determine blend accuracy ("Actual Weight % Catalyst" and "Blend Error").

| **TABLE 2** | | | | | | | | |
|---|---|---|---|---|---|---|---|---|
| Bag # | Measured Weights (grams) | | Calculated Charge Weight | Charge Wt Error | Measured Weights (grams) | | Actual Weight % Catalyst | Blend Error |
| | SEALED BAG (TOTAL) | BAG ONLY | | | CATALYS | DILUENT | | |
| 1 | 576.17 | 9.79 | 566.38 | -0.02% | 425.98 | 140.36 | 75.2% | 0.3% |
| 2 | 576.37 | 9.91 | 566.46 | -0.01% | 423.63 | 143.15 | 74.7% | -0.3% |
| 3 | 576.27 | 9.91 | 566.36 | -0.02% | 425.05 | 141.72 | 75.0% | -0.0% |
| 4 | 576.20 | 9.81 | 566.39 | -0.02% | 424.41 | 142.20 | 74.9% | -0.1 % |
| 5 | 575.88 | 9.80 | 566.08 | -0.07% | 426.95 | 139.30 | 75.4% | 0.5% |
| 6 | 577.22 | 10.10 | 567.12 | 0.11% | 425.33 | 141.77 | 75.0% | 0.0% |
| 7 | 576.85 | 10.06 | 566.79 | 0.05% | 425.18 | 141.74 | 75.0% | 0.0% |
| 8 | 577.24 | 10.20 | 567.04 | 0.10% | 424.49 | 142.70 | 74.8% | -0.2% |
| 9 | 575.92 | 10.00 | 565.92 | -0.10% | 424.35 | 141.96 | 74.9% | -0.1% |
| 10 | 576.85 | 9.93 | 566.92 | 0.07% | 424.08 | 142.95 | 74.8% | -0.3% |
| 11 | 577.20 | 10.55 | 566.65 | 0.03% | 424.97 | 141.67 | 75.0% | 0.0% |
| 12 | 576.38 | 10.33 | 566.05 | -0.08% | 424.45 | 141.69 | 75.0% | -0.0% |
| 13 | 576.46 | 10.49 | 565.97 | -0.09% | 424.76 | 141.38 | 75.0% | 0.0% |
| 14 | 576.75 | 10.54 | 566.21 | -0.05% | 424.38 | 142.00 | 74.9% | -0.1% |
| 15 | 576.80 | 10.46 | 566.34 | -0.03% | 426.46 | 140.08 | 75.3% | 0.4% |

The data in Table 2 demonstrates that the measured weights of the sample charges as compared to the target charge weight are within the range of +/- 0.11 %; Table 2 also shows that the blend error for the actual catalyst mixture as compared to the 75% catalyst mixture target is not more than about 0.5%. It is therefore evident from this data that the method of the present invention (a) provides catalyst charges with negligible variation in weights and (b) produces catalyst mixtures with negligible variation in composition.

### Example 3 [drop test example]

As was previously stated, it is advisable that the minimum particulate solids drop rate for a specific catalyst loading situation be determined empirically, on a case-by-case basis, through the use of simple experimentation. This simple, iterative method is referred to as a "drop test" and can be performed by those of ordinary skill with the benefit of this disclosure.

In the specific case of this example, A ten-tube, vibratory catalyst loader, of the type described in US Patent No. 6,132,157 (commercially available from Cat Tech of Deer Park, TX), was utilized to load test charges of material (inerts or catalyst mixture) into a set number of the ten possible reactor tubes. The catalyst loader used in this example is one of several identical loaders in a set which are routinely used to load catalyst into commercial scale reactors. The loader comprises a horizontal vibrating tray with ten sequentially numbered, parallel lanes. These lanes are aligned with ten adjacent reactor tubes during the loading operation. For the purposes of this example, the catalyst loader's lanes are sequentially numbered 1 through 10, with lanes 1 and 10 being the outermost lanes located at the edge of the tray, and lanes 5 and 6 being the innermost lanes, located in the center of the tray. These experiments were performed by placing the loader on the top tubesheet of a commercial-scale oxidation reactor with the same design and tube size (25mm inside diameter) as the reactor to be loaded. The drop rate of material (catalyst, inert and/or mixtures thereof) in each test trial was controlled by adjusting the vibration frequency of the loader to a specific numbered setting using the loader's built-in digital controller. In this way, the exact settings for the particular catalyst loader in use can be determined and recorded. As used herein, the term "drop time" refers to the elapsed time period that begins with the first particle falling from the catalyst loader's tray into a given reactor tube and ends when the last particle falls from the catalyst loader's tray into that same reactor tube.

After each step in the testing, the "outage" - i.e., the topmost elevation of the accumulated material in the tube - is manually measured to verify that the intended quantity of material and packing density has been obtained.

In this example, eight identical 0.48 liter charges of R2Z1 catalyst blend (prepared as previously described in Example 2) were used in four consecutive test drops. The target zone length for each test drop was 1000 mm. It is desired that the variability of the average reaction zone length as compared to the target is less than 3%. Additionally, it is desired that individual tube reaction zone length values would not vary more than 0.5% from the average reaction zone length value. Data from these drop tests is summarized in Table 3 below.

### Test Drop A

Based on previous experience loading catalysts, it was initially guessed that a catalyst loader vibration setting of 40 might be an appropriate starting point for testing. A first R2Z1 catalyst charge was transferred through Lane 1 of the loader in a total time of 56 seconds, which is equivalent to a drop rate of 118 seconds/liter. The resulting zone length was determined to be 968 mm; as compared to the target length of 1000 mm, this represented an average zone length variation of -3.2%.

### Test Drop B

In order to reduce the average zone length variation, the controller setting was adjusted to 47, which transferred the catalyst charge more quickly. More particularly, a second R2Z1 catalyst charge was transferred through Lane 3 of the loader, with the controller setting on 47, in a total time of 39 seconds, which is equivalent to a drop rate of 81 seconds/liter. The resulting zone length was determined to be 984 mm; as compared to the target length of 1000 mm, this represented a reduced average zone length variation of -1.6%.

### Test Drop C

In an attempt to further reduce the average zone length variation, the controller setting was next adjusted to 48, thereby transferring the catalyst mixture just a little more quickly. In this test, a third and a fourth R2Z1 catalyst charge were simultaneously transferred through Lanes 4 and 5, respectively, of the loader in a total time of 36 seconds, which is equivalent to a drop rate of 75 seconds/liter. The resulting average zone length was determined to be 981 mm; as compared to the target length of 1000 mm, this represented an average zone length variation of - 1.9%. Because there were now two length measurements, it was also possible to assess individual tube zone length variability against the average zone length value. In this case, the individual variability was just 0.16%, which is well within the desired range of not more than 0.5%.

### Test Drop D

A final test drop was performed, this time using four R2Z1 catalyst charges. The catalyst loader controller setting was maintained at the setting of 48. Each of the four test charges were simultaneously transferred through Lanes 6, 7, 9, and 10, respectively, of the catalyst loader in a time of 37 seconds, which is equivalent to a drop rate of 77 seconds/liter. The resulting average zone length was determined to be 975 mm; as compared to the target length of 1000 mm, this represented an average zone length variation of -2.5%. The individual tube variability as compared to the average zone length was not more than -0.37%, which is well within the desired range (not more than 0.5%).

**Table 3**

| **Test Drop** | **Controller Setting** | **Measured Drop Time** *sec* | **Calculated Drop Rate** *sec*/*liter* | **Loader Lane #** | **Zone Length** *mm* | **Tube vs. Average Zone Length** | **Average vs. Target Zone Length** |
|---|---|---|---|---|---|---|---|
| **A** | 40 | 56 | 118 | 1 | 968 | | |
| | *test A average zone length* | | | | 968 | | -3.2% |
| **B** | 47 | 39 | 81 | 3 | 984 | | |
| | *test B average zone length* | | | | 984 | | -1.6% |
| **C** | 48 | 36 | 75 | 4 | 983 | 0.16% | |
| | | | | 5 | 979 | -0.16% | |
| | *test C average zone length* | | | | 981 | | -1.9% |
| **D** | 48 | 37 | 77 | 6 | 972 | -0.37% | |
| | | | | 7 | 976 | 0.12% | |
| | | | | 9 | 975 | -0.04% | |
| | | | | 10 | 978 | 0.28% | |
| | *test D average zone length* | | | | 975 | | -2.5% |

As a result of this simple, iterative test method, it was determined that a drop rate of 77 seconds/liter was appropriate for uniform loading of catalyst blend R2Z1 into the 25mm tubes of the commercial shell and tube reactor. It was also determined that this drop rate could be obtained at a catalyst loader controller setting of 48. Additionally, the individual data from this example illustrates that multi-tube vibratory catalyst loaders, wherein catalyst is conveyed across a tray and into a series of adjacent tubes, may also experience variation in the drop rate across the lanes of the tray, with the outer lanes of the tray tending to drop the catalyst at a different rate than the lanes nearest the center of the tray.

### Example 4 [catalyst loading example]

A commercial-scale single reactor shell (SRS-type) oxidation reactor is to be used to produce acrylic acid from propylene. The specific SRS oxidation reactor of this example comprises over 25,000 identical tubes. Figure 1 represents a single tube from this reactor, with a diameter of 1 inch (25.4mm) and a length of 26 feet (7925mm).

As is well-known in the art, within an SRS-type reactor, propylene is converted to acrolein in a first reaction stage, followed by the conversion of acrolein to acrylic acid in a second reaction stage. In this specific case, the example reactor is operated in an "upflow" configuration - that is, in operation, reactants will be introduced from the bottom of each tube and flow vertically upward; products will exit each reactor tube at the top. Generally, in such a reactor configuration, the first reaction stage (R1) lies between the bottom tubesheet (1) and the intermediate tubesheet (15) in each tube; the second reaction stage (R2) lies between the intermediate tubesheet (15) and the top tubesheet (31) in each tube.

Based upon optimization studies performed in the pilot-plant reaction system, a three reaction-zone catalyst packing schedule was developed for use in this example reactor (see Figure 1). This three catalyst zone packing schedule comprises a single catalyst zone for the first reaction stage (R1) and two catalyst zones of differing activity for the second reaction stage (R2), with an interstage zone comprising solid inert material positioned between the first and second reaction stages (R1, R2).

In the case of this specific example, two independently controlled flows of nitrate cooling salt are circulated through the shell of the reactor to provide cooling to each of the reaction stages. In the R1 salt circulation, cooling salt enters the lower portion of the reactor shell at a point above bottom tubesheet (1), flows around the tubes and exits the middle portion of the reactor shell at a point below intermediate tubesheet (15); in the R2 salt circulation, cooling salt enters the middle portion of the reactor shell at a point above the intermediate tubesheet (15), flows around the tubes and exits the upper portion of the reactor shell at a point below the top tubesheet (31). Such a configuration is referred to as a co-current cooling salt circulation.

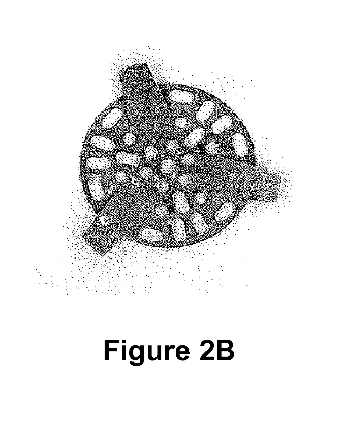

Given the sensitivity of acrylic acid yield to variations in process conditions such as temperature and reaction rate, it will be evident to one of ordinary skill in the art that it is necessary that the contents of each of the over 25,000 tubes within this reactor are substantially similar in the quantity, activity, and placement of catalysts. Pre-blended charges of particulate solids material for each zone within the tube shown in Figure 1 are prepared according to the method of the present invention, and are placed into bags for ease of handling, as described in Examples 1 and 2. Each tube is to be loaded in the following manner, to achieve the packing schedule illustrated in Figure 1:
Beginning with empty tubes, the preheating zone is first assembled. A catalyst clip (2) of the type shown in Figure 2b and commercially available from Deggendorfer Werft und Eisenbau GmbH of Germany is first placed at the bottom of each tube to hold the catalyst in-place within each tube.

A multi-tube, vibratory catalyst loader, of the type described in US Patent No. 6,132,157 (commercially available from Cat Tech of Deer Park, TX), is utilized to simultaneously load charges of material (inerts or catalyst mixture) into each of ten reactor tubes at one time. Although this example focuses on the operation of a single catalyst loader, it will be evident to one of ordinary skill that the task of loading tubes in a large reactor can be performed more quickly when multiple catalyst loaders are employed at the same time. While the optimal number of loaders that can be operated simultaneously will vary with the size of the reactor and the physical dimensions of the loader itself, it is common for between five and ten catalyst loaders to be operated simultaneously during catalyst installation. The drop rate of solid material (catalyst mixture or inert) in each step is controlled by adjusting the vibration frequency of the loader to the previously-determined target value identified in drop testing. After each step, the "outage" - or topmost elevation of the accumulated material in the tube - is measured to verify that intended quantity of material and packing density has been obtained. Measurement of pressure drop ("dP") on a random sampling of tubes may also be performed to assure tube-to-tube uniformity. If either of these measurements indicates an appreciable error in loading, the non-compliant charge of material may be removed and a fresh charge loaded to correct the error.

The aforementioned catalyst loader is used to place a layer of 218 grams of inert material (6.4mm diameter Denstone 57^{®} catalyst bed supports, available from Norton Chemical Process Products Corp., of Akron, Ohio) on top of clip (2), to form preheating zone (3).

With the preheating zone (3) in place, the components of the first reaction stage (R1) are then loaded. A charge of approximately 2040 grams of "R1Z1" catalyst mixture is placed within each tube at a drop rate of 65 seconds/liter to form a single catalyst zone (11) within the first reaction stage; this catalyst zone occupies the 3520mm of tube length directly above preheating zone (3). In this specific example, R1Z1 catalyst mixture comprises 100 wt% YX-38.52 DU catalyst, manufactured by Nippon Kayaku; preparation of R1Z1 charges has been previously described in Example 1.

Next, using the vibratory catalyst loader, a charge of 272 grams of "IS" inert material is added to the tube at a drop rate of 167 seconds/liter; this inert material occupies the 500mm of tube length directly above single catalyst zone (11). In this specific example, the IS inert material comprises 7.5mm diameter by 6 mm long stainless steel Raschig rings.

Next, the second reaction stage (R2) is loaded. Again using the vibratory catalyst loader, two-catalyst zones (21 and 22) are sequentially loaded into each tube to form the second reaction stage. A bagged charge of approximately 566 grams of "R2Z1" catalyst mixture is placed into the catalyst loader and transferred to the tube at a drop rate of 77 seconds/liter to form catalyst zone (21) within the second reaction stage; this catalyst zone occupies the 1000mm of tube length directly above inert material (16). A bagged charge of approximately 1281 grams of "R2Z2" catalyst mixture is then placed into the catalyst loader and transferred to the tube at a drop rate of 69 seconds/liter to form catalyst zone (22) within the second reaction stage; this catalyst zone occupies the 2240mm of tube length directly above catalyst zone (21). In this specific example, R2Z1 catalyst mixture comprises a homogenous blend of 75 wt% T202.52XS3 catalyst, manufactured by Nippon Kayaku, and 25 wt% 1B-1000 (5.2mm diameter spheres) diluent, also available from Nippon Kayaku; preparation of R2Z1 charges has been previously described in Example 2. R2Z2 catalyst mixture comprises 100 wt% T202.52XS3 catalyst, manufactured by Nippon Kayaku, and was prepared in essentially the same manner as used to prepare charges of R1 Z1 catalyst.

Finally, about 179 grams of inert material (32) is loaded on top of catalyst zone (22) by hand (although the aforementioned vibratory catalyst loader could be used if desired); this inert material forms the "exit cooling zone" and generally occupies the 270mm of tube length directly above catalyst zone (22). In this specific example, inert material (32) comprises 6.4mm diameter Denstone 57^{®} catalyst bed supports, available from Norton Chemical Process Products Corp., of Akron, Ohio.

A final measurement of dP on a random sampling of tubes is performed to assure tube-to-tube uniformity. The quantity of inert material (32) may be increased or decreased, as appropriate, to provide a final adjustment to the dP of the tube.

The repacked reactor was then put into commercial operation producing acrylic acid under the following operating conditions, whereby it was demonstrated that acrylic acid was produced stably, for a long time at excellent yield:
propylene feed rate to the reactor = 29,000 lb/hr;
7.3% propylene in the feed;
1.83 02 to propylene ratio in the feed;
9.7% water in the feed;
reactor inlet pressure of 19.4 psig;
R1 salt temperature of 327.4 C;
R2 salt temperature of 287.3 C

At a time of 825 hours time on-stream (TOS), the performance of this oxidation reactor was 86.2% overall acrylic acid yield at an overall propylene conversion of 96.7%. The acrolein yield was 1.2%. From this data, it can be seen that the use of catalyst charges prepared in accordance with the method of the present invention produces acrylic acid at excellent yield and high productivity.

### EXAMPLE 5 [rapid blending & bagging operation]

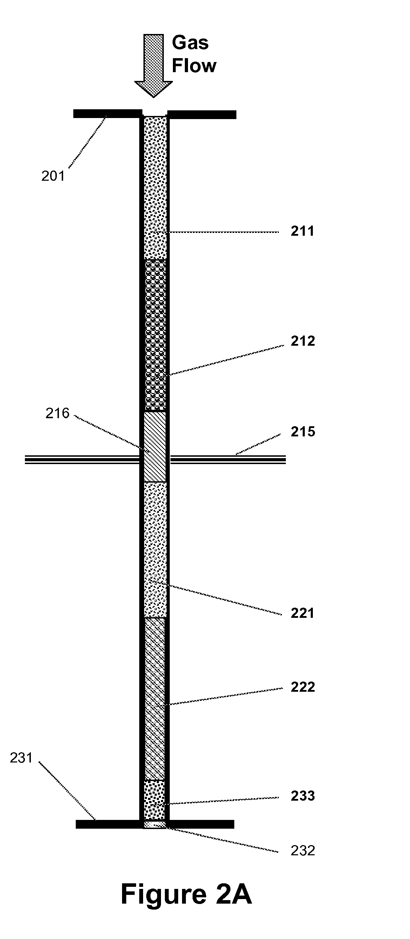

Based upon pilot-plant studies, a four zone catalyst packing schedule (see Figure 2a) was developed for use in another SRS-type commercial reactor for the production of acrylic acid from propylene. As previously described, propylene is converted to acrolein in a first reaction stage, followed by the conversion of acrolein to acrylic acid in a second reaction stage. The four zone packing schedule of this example comprised two catalyst zones of differing activity for the first reaction stage, and two catalyst zones of differing activity for the second reaction stage. ACF4 and ACS6 catalysts, available from Nippon Shokubai Chemical Limited (NSCL) of Japan were utilized in this example reactor.

In this specific case, the example reactor comprised over 25,000 tubes and was operated in an "downflow" configuration - that is, in operation, reactants will be introduced from the top of each tube and flow vertically downward; products will exit each reactor tube at the bottom. Generally, in such a reactor configuration, the first reaction stage (R1) lies between the top tubesheet (201) and the intermediate tubesheet (215) in each tube; the second reaction stage (R2) lies between the intermediate tubesheet (215) and the bottom tubesheet (231) of each tube.

In the case of this specific example, two independently controlled flows of nitrate cooling salt are circulated through the shell of the reactor to provide cooling to each of the reaction stages. In the R2 salt circulation, cooling salt enters the lower portion of the reactor shell at a point above bottom tubesheet (231), flows around the tubes and exits the middle portion of the reactor shell at a point below intermediate tubesheet (215); in the R1 salt circulation, cooling salt enters the middle portion of the reactor shell at a point above the intermediate tubesheet (215), flows around the tubes and exits the upper portion of the reactor shell at a point below the top tubesheet (201). Such a configuration is referred to as a countercurrent cooling salt circulation.

Each tube is to be loaded in accordance with the packing schedule summarized in Figure 2a and described herein. A catalyst clip (232) of the type shown in Figure 2b and commercially available from Deggendorfer Werft und Eísenbau GmbH of Germany is first placed at the bottom of each tube to hold the catalyst in-place within each tube. A layer of 232 grams of 3/8" diameter spherical ceramic balls is then placed on top of clip (232), forming the cooling zone (233). Next, 1395 grams of R2Z2 catalyst mixture (222) is placed on top of cooling zone (233). On top of the R2Z2 catalyst mixture (222) is next placed a layer of 616 grams of R2Z1 catalyst mixture (221). Next is placed a layer of 635 grams of ¼" x ¼" x 0.03" wall thickness stainless steel Raschig rings, forming the Interstage zone (216) for this particular packing schedule. Above interstage zone (216) is placed a layer of 986 grams of R1Z2 catalyst mixture (212). Finally, a layer of 447 grams of R1Z1 catalyst mixture (211) is placed on top of the R1Z2 catalyst (212) to complete the filling of the tube. In order to minimize the downtime associated with loading catalyst into each of the over 25,000 tubes in this specific reactor, a multi-tube, vibratory catalyst loader, of the type described in US Patent No. 6,132,157 (commercially available from Cat Tech of Deer Park, TX), is utilized to simultaneously load charges of material (catalyst mixture or inerts) into each of ten reactor tubes at one time. To facilitate the operation of the catalyst loader, individual charges of catalyst, raschig rings, and ceramic balls are prepared in advance using the method of the present invention and are placed into individual sealed bags for ease of handling. Table 4 summarizes the activity involved in the use of a combinatorial weighing system in accordance with the inventive method:

| **Charge** | **Number of Bags Produced** | **Average Charge weight** | **Description** |
|---|---|---|---|
| R1Z1 | 26,300 | 447 grams | 66 wt% ACF4 catalyst (NSCL); 34 wt% ¼" x 3/16" cylindrical diluent |
| R1Z2 | 25,880 | 986 grams | 100% ACF4 catalyst (NSCL) |
| Interstag e zone | 26,000 | 635 grams | ¼" x ¼" x 0.03 wall thickness, 410 stainless steel |
| R2Z1 | 26,080 | 616 grams | 86 wt% ACS6 catalyst (NSCL); 14 wt% ¼" x 3/16" cylindrical diluent |
| R2Z2 | 26,160 | 1,395 grams | 100% ACS6 catalyst (NSCL) |
| Cooling zone | 26,250 | 232 grams | 3/8" spherical ceramic diluent |
| **TOTAL** | **156,670** | - - - - - - - - - - | - - - - - - - - - - |

The total time to produce these more than 156,000 bags was just 115.5 hours, including time spent filling hoppers, programming the system controller, and cleaning the system between charges - resulting in an overall average operating speed for the system of more than 25 bags/minute. Random sampling indicated that all charge weights were within +/-3 grams of the target weight, equivalent to not more than +/- 1% by weight variability based on the total desired weight of each bag. This demonstrates that the substantial number of catalyst charges having sufficient homogeneity of amount and composition that is needed for a commercial scale reaction system can be quickly and efficiently produced using the method of the present invention.

### Example 6a

The inventive method can be used to prepare a "hybrid" catalyst blend comprising 60 wt% ACF7 catalyst (available from NSCL) and 40 wt% YX-129 catalyst (available from Nippon Kayaku), both of which are suitable catalysts for use in the first reaction stage of a propylene oxidation reactor. Such a "hybrid" catalyst blend would be suitable for loading into the first reaction stage of the reactor to form the single catalyst zone (11), in accordance with the 3-reaction zone packing schedule illustrated in Figure 1 and discussed hereinabove. Such a hybrid catalyst blend is not available commercially, but can be produced through the use of a combinatorial weighing system, in accordance with the method of the present invention. This hybrid catalyst blend would be useful in the commercial-scale production of acrylic acid from propylene, in the first reaction zone of the oxidation reactor, because it would maximize desirable features such as catalyst service life and selectivity of one of the commercial catalysts, while minimizing undesirable features such as molybdenum sublimation in the other commercial catalyst. It is envisioned that similar blends ranging from about 40 to 75 wt% ACF7 catalyst might also be beneficially utilized in the first reaction stage of the 3-reaction zone packing schedule illustrated in Figure 1.

### Example 6b

The inventive method can be used to prepare a "hybrid" catalyst blend comprising 50 wt% YX-38 catalyst (available from Nippon Kayaku) and 50 wt% ACF4 catalyst (available from NSCL), both of which are suitable catalysts for use in the first reaction stage of a propylene oxidation reactor. Such a "hybrid" catalyst blend would be suitable for loading into single catalyst zone (11) in accordance with the 3-reaction zone packing schedule illustrated in Figure 1. Such a hybrid catalyst blend is not available commercially, but can be produced through the use of a combinatorial weighing system, in accordance with the method of the present invention. This hybrid catalyst blend would be useful in the commercial-scale production of acrylic acid from propylene as it maximizes desirable features such as catalyst service life and selectivity of one commercial catalyst, while minimizing undesirable features such as molybdenum sublimation in the other commercial catalyst. It is envisioned that similar blends ranging from about 30 to 70 wt% YX-38 catalyst might also be beneficially utilized in the first reaction stage of the 3-reaction zone packing schedule illustrated in Figure 1.

## Claims

1. A method for blending solid materials to be placed in the tubes of a shell and tube reactor, said method comprising:
(A) identifiying a packing schedule which lists the types and amounts of solid materials needed to form different batches of solid materials for arranging in the tubes and forming desired regions in the shell and tube reactor, wherein each of said batches comprises one or more materials selected from the group consisting of: solid catalyst materials, solid inert materials, and blends thereof;
(B) using a combinatorial weighing machine to produce at least one of the different batches, wherein types and amounts of solid catalyst materials and solid inert materials blended for each batch of solid materials are selected based on the packing schedule;
(C) collecting at least one of the batches of solid materials in a plurality of containers, wherein each container of said plurality contains the same amount and proportion of the one or more solid materials, said amount being determined based upon the packing schedule, and each of said plurality comprising a total number of containers, said total number being determined by the number and size of the tubes of the shell and tube reactor; and

2. The method according to Claim 1, further comprising:
(D) loading said batches of solid materials from each of said containers into corresponding tubes of the shell and tube reactor, according to a predetermined order dictated by the packing schedule, to form said desired regions within the reactor which are consistent and homogeneous.

3. The method according to Claim 1, wherein the combinatorial weighing machine comprises adjustable vibrating means for changing the rate at which solid materials are moved through the machine and blended with one another.

4. The method according to Claim 1, wherein the combinatorial weighing machine comprises dust collection means for collecting and removing dust from the solid materials, thereby preventing unwanted accumulation of dust in the tubes of the shell and tube reactor.

5. The method according to Claim 1, wherein the containers are bags and a bagging machine is used with the combinatorial weighing machine to accomplish the step of collecting each of the batches of solid materials in a plurality of containers.

6. The method according to Claim 2, wherein the step of loading the batches of solid materials from each of said containers into corresponding tubes of the shell and tube reactor is accomplished using a solids loading machine having one or more tubular members aligned with corresponding tubes of the shell and tube reactor.

7. The method according to Claim 1, wherein the packing schedule provides a list of types and amounts of materials required to perform two-stage oxidation of an alkene to form a corresponding unsaturated carboxylic acid, and wherein the desired regions comprise a first reaction stage wherein the alkene is converted to an unsaturated aldehyde and a second reaction stage wherein the unsaturated aldehyde is further converted to the corresponding unsaturated carboxylic acid.

8. The method according to Claim 7, wherein the first reaction stage comprises at least one catalyst comprising a mixed metal oxide and being capable of catalyzing the conversion of an alkene to an unsaturated aldehyde, and the second reaction stage comprises at least one catalyst comprising a mixed metal oxide and being capable of catalyzing the conversion of an unsaturated aldehyde to an unsaturated carboxylic acid.

9. The method according to Claim 8, wherein said first reaction stage comprises a plurality of reaction zones.

10. The method according to Claim 8, wherein said second reaction stage comprises a plurality of reaction zones.

11. The method according to Claim 8, where the unsaturated carboxylic acid comprises (meth)acrylic acid.

12. The method according to Claim 1, wherein the packing schedule provides a list of types and amounts of materials required to produce vinyl acetate monomer from reactants comprising ethylene, oxygen and acetic acid.

13. The method according to Claim 5, wherein said amount of solid materials in each bag varies from bag to bag by not more than +/- 1 % by weight based on the total weight of each bag.

14. The method according to Claim 1, wherein (a) the batches of solid materials are loaded into the tubes of the shell and tube reactor at a drop rate of not more than 30 seconds per liter; and/or (b) at least one of said batches of solid materials comprises a blend of two or more solid catalyst materials having the same essential components but different catalytic activity; and/or (c) at least one of said batches of solid materials comprises a blend of at least one solid inert material and at least one solid catalyst material.

15. The method of Claim 15, wherein in (b) said same essential components of the solid catalyst materials comprise molybdenum, bismuth and iron.
